# EUROPÄISCHE PATENTSCHRIFT

(11) **EP 1 663 542 B1**
(45) Veröffentlichungstag und Bekanntmachung des Hinweises auf die Patenterteilung: **09.06.2010**
(21) Anmeldenummer: 04761043.1
(22) Anmeldetag: 27.09.2004
(51) Int. Cl.: B21D 55/00, F16P 3/14, B30B 15/28

(54) **FERTIGUNGSMASCHINE MIT EINER SICHERHEITSEINRICHTUNG MIT EINER HÖHENARRETIERBAREN HALTEVORRICHTUNG**
WORKING MACHINE WITH SAFETY MECHANISM COMPRISING A HEIGHT-ADJUSTABLE HOLDING DEVICE
MACHINE OUTIL AVEC UN SYSTEME DE SECURITE COMPORTANT UN DISPOSITIF DE FIXATION REGLABLE EN HAUTEUR

(30) Priorität: 26.09.2003 AT 15272003
(43) Veröffentlichungstag der Anmeldung: 07.06.2006
(73) Patentinhaber: Trumpf Maschinen Austria GmbH & CO. KG., 4061 Pasching (AT)
(72) Erfinder: FISCHEREDER, Bernhard, A-4609 Thalheim bei Wels (AT)
(74) Vertreter: Ofner, Clemens
(86) Internationale Anmeldenummer: PCT/AT2004/000321
(87) Internationale Veröffentlichungsnummer: WO 2005/030410

(56) Entgegenhaltungen:
- EP-A- 1 258 667
- WO-A-01/56720
- WO-A-03/015951
- DE-A- 10 143 505
- US-A- 4 166 369

## Beschreibung

Die Erfindung betrifft eine Fertigungsmaschine mit einer Sicherheitseinrichtung wie im Oberbegriff des Anspruches 1 beschrieben.

Aus der WO 01/56720 A1 der selben Anmelderin ist eine Sicherheitseinrichtung für eine Fertigungsmaschine, z.B. eine Abkantpresse, bekannt. Diese besteht aus einem Strahlensender und einem Strahlenempfänger. Diese sind an einem über eine Antriebsanordnung relativ zu einem fest stehenden Pressenbalken verstellbaren Pressenbalken mittels einer Haltevorrichtung befestigt und bilden einen Strahlenvorhang unmittelbar vor Biegewerkzeugen einer Bedienperson zugewandt der sich über die gesamte Länge der Pressenbalken erstrecken. Die Sicherheitseinrichtung ist mit der Steuereinrichtung der Presse leitungsverbunden und detektiert durch eine Unterbrechung des Strahlenvorhanges Objekte im Nahbereich der Biegwerkzeuge um so eine Gefährdung der Bedienperson wirkungsvoll zu vermeiden. Die Haltevorrichtungen ist direkt in einer die Biegewerkzeuge festlegenden Aufnahmevorrichtung lösbar befestigt.

Aufgabe der Erfindung ist es eine Sicherheitseinrichtung zu schaffen, mit der ein Werkzeugaustausch an der Fertigungseinrichtung durch einen einfach zu bewirkenden Verstellvorgang der Sicherheitseinrichtung ohne deren Demontage vorgenommen werden kann.

Diese Aufgabe der Erfindung wird durch die im Anspruch 1 wiedergegebenen Merkmale erreicht. Der überraschende Vorteil dabei ist, dass durch die Festlegung einer Parkposition für die Haltevorrichtung, in Abhängigkeit eines gesamten Verstellbereiches zu einer in unterschiedlicher Lage relativ zum Pressenbalken erforderlicher Arbeitsposition, bedingt durch unterschiedliche Werkzeughöhen, ein Verstellvorgang, um Elemente der Sicherheitseinrichtung aus die Umrüstung der Fertigungseinrichtung behindernden Positionen zu bringen, durch die bei einer Linearverstellung umschaltbare Verriegelungseinrichtung einfach und sicher durchzuführen ist.

Möglich ist dabei auch eine Ausbildung nach Anspruch 2, weil dadurch die verstellbare Haltevorrichtung in Leichtbauweise erstellbar ist.

Es ist aber auch eine Ausführung nach Anspruch 3 möglich, wodurch ein modulartiger Aufbau der Haltevorrichtung gegeben ist.

Gemäß den vorteilhaften Weiterbildungen wie in den Ansprüchen 4 bis 7 beschrieben, wird ein einfacher technischer Aufbau erreicht, der eine hohe Sicherheit gewährleistet und kostengünstig herstellbar ist.

Gemäß den Ansprüchen 8 bis 11 ist eine Variantenbildung möglich, entsprechend der Möglichkeit, die Führungs- oder Arretiervorrichtung entweder am Pressenbalken oder am Haltemittel bewegungsfest anzuordnen.

Eine vorteilhafte Ausbildung beschreibt auch Anspruch 12, weil dadurch eine einfache Betätigung des Riegelelementes der Verriegelungseinrichtung erreicht wird.

Gemäß den weiteren, in den Ansprüchen 13 bis 15 beschriebenen vorteilhaften Ausbildungen wird eine Vereinfachung der Bauelemente erreicht und damit die Montage wesentlich erleichtert.

Vorteilhaft ist aber auch eine Ausbildung nach Anspruch 16, weil dadurch eine geschlossene Einheit erreicht wird und ein unzulässiger Eingriff vermieden wird.

Durch die vorteilhafte Ausgestaltung nach Anspruch 17 wird die Bestückung der Sicherheitseinrichtung mit den Sicherheitselementen vereinfacht.

Es sind aber auch Ausbildungen nach den Ansprüchen 18 bis 20 vorteilhaft, wodurch die Sicherheitseinrichtung sehr einfach an die Maschinensteuerung anbindbar ist, wodurch die Montage vereinfacht wird, wie auch weiters insgesamt die erfindungsgemäße Sicherheitseinrichtung, besonders auch für das Nachrüsten an bereits ohne diese Einrichtung bestehender Fertigungseinrichtungen, besonders geeignet ist.

Die vorteilhafte Weiterbildung wie im Anspruch 21 gekennzeichnet, ermöglicht die Positionierung von Strahlensender und Strahlenempfänger in auf unterschiedliche Werkzeughöhen abgestimmten und vorgegebenen Positionen.

Schließlich kennzeichnen die Ansprüche 22 bis 26 vorteilhafte Weiterbildungen mit denen eine wirkungsvolle, selbsttätige Verriegelung in einer Park- aber auch Arbeitsposition der Haltevorrichtung für den Strahlensender und auch Strahlenempfänger erreicht wird und eine Verstellung in eine tiefere Position einen bewusst herbeigeführten Entriegelungsvorgang erfordert und damit das Fehlerrisiko minimiert wird. Darüber hinaus ist die Ausbildung technisch hochwertig zu realisieren.

Zum besseren Verständnis der Erfindung wird diese anhand der in den Figuren gezeigten Ausführungsbeispiele näher erläutert.

Es zeigen:
- Fig. 1: eine erfindungsgemäße Fertigungseinrichtung mit einer Sicherheitseinrichtung in schematischer Darstellung;
- Fig. 2: eine vereinfachte Darstellung der erfindungsgemäßen Fertigungseinrichtung mit den Sicherheitseinrichtung, in Ansicht;
- Fig. 3: eine Detailansicht der Haltevorrichtung der Sicherheitseinrichtung, geschnitten gemäß den Linien III-III in Fig. 4;
- Fig. 4: die Haltevorrichtung, geschnitten gemäß den Linien IV-IV in Fig. 3;
- Fig. 5: eine andere Ausbildung der Sicherheitseinrichtung an einer Fertigungseinrich- tung in vereinfachter Darstellung, in Ansicht;
- Fig. 6: eine andere Ausbildung der erfindungsgemäßen Fertigungseinrichtung, ge- schnitten gemäß den Linien VI-VI in Fig. 7;
- Fig. 7: die Sicherheitseinrichtung, geschnitten gemäß den Linien VII-VII in Fig. 6.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

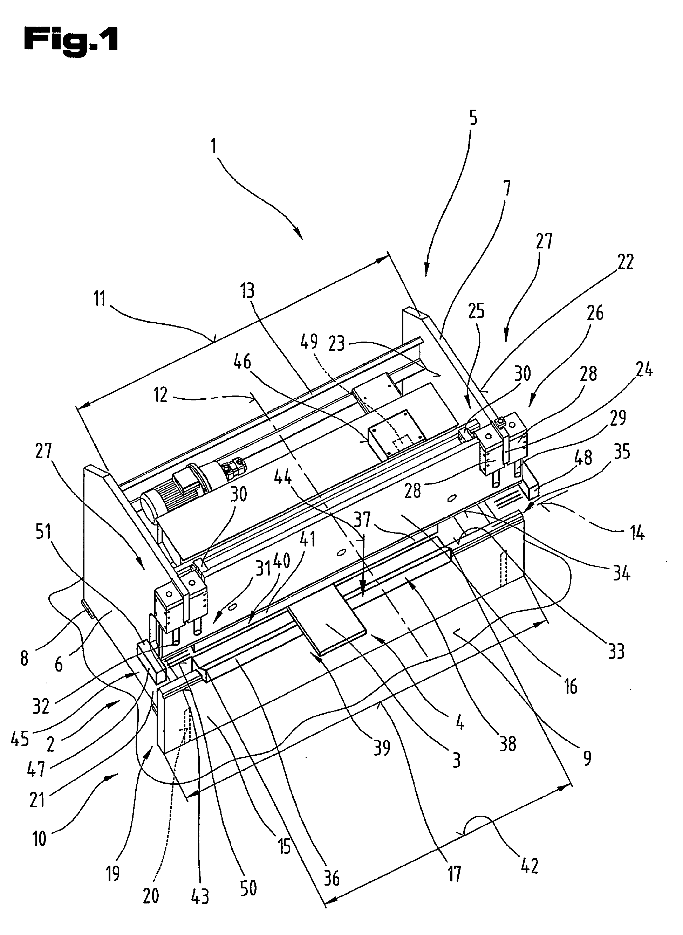

In der Fig. 1 ist eine Fertigungseinrichtung 1, insbesondere Abkantpresse 2, für das Umformen, insbesondere von Blechteilen 3, z.B. zu Gehäuseteilen, Profilen etc., gezeigt. Derartige Fertigungseinrichtungen 1 werden im speziellen für die Herstellung langgestreckter Profile 4, z.B. Winkelprofil, U-Profil, Z-Profil etc. mit einem im allgemeinen sehr großen Längen/Querschnittsverhältnis verwendet.

Ein Maschinengestell 5 der Fertigungseinrichtung 1 besteht im wesentlichen aus zwei parallel und in Abstand zueinander angeordneten C-förmig gestalteten Ständer-Seitenwangen 6, 7, die direkt oder bei Bedarf z.B. über Dämpfungselemente 8 auf einer Aufstandsfläche 9 abgestützt oder in einer weiteren Ausführungsform, wie beispielhaft gezeigt, auf einer gemeinsamen Bodenplatte 10 befestigt, insbesondere mit dieser verschweißt sind. Weiters sind die Ständer-Seitenwangen 6, 7 miteinander in einem Abstand 11 über zu einer Mittelebene 12 senkrecht verlaufende Wandteile 13 verbunden.

In bezug auf eine zu der Aufstandsfläche 9 parallel verlaufenden Arbeitsebene 14 weist die Fertigungseinrichtung 1 zwei einander gegenüberliegende Pressenbalken 15, 16 auf, die sich über eine Länge 17 erstrecken, die generell von der vorgesehenen Maschinengröße bzw. der vorgesehenen Arbeitslänge für das Biegen der Blechteile 3 festgelegt ist.

Der der Aufstandsfläche 9 zugewandte Pressenbalken 15 ist über eine Befestigungsanordnung 19 am Maschinengestell 5, bevorzugt direkt an Stirnflächen 20 von der Bodenplatte 10 zugeordneten Schenkeln 21 der C-förmigen Seitenwangen 6, 7 befestigt, insbesondere mittels Schweißverbindung. An Seitenflächen 22, 23 von zu der Aufstandsfläche 9 beabstandeten Schenkeln 24 der C-förmigen Ständer-Seitenwangen 6, 7 sind durch ein Druckmedium beaufschlagbare Stellantriebe 25, 26 der Antriebsanordnung 27, gebildet aus doppelt wirkenden Hydraulikzylindern 28, angeordnet. Stellelemente 29, z.B. Kolbenstangen der Hydraulikzylinder 28, sind mit dem in Führungsanordnungen 30 des Maschinengestells 5 in einer zur Arbeitsebene 14 senkrecht verlaufenden Richtung verstellbar gelagerten Pressenbalken 16 über Gelenklager 31 und z.B. Bolzen 32 antriebsverbunden. Der Pressenbalken 15 und der Pressenbalken 16 erstrecken sich über die Länge 17 in etwa symmetrisch und in senkrechter Richtung zur Mittelebene 12, wobei die Länge 17 geringfügig größer als der Abstand 11 ist.

Auf einander zugewandten und zur Arbeitsebene 14 parallel verlaufenden Stirnflächen 33, 34 weisen die Pressenbalken 15, 16 Werkzeugaufnahmevorrichtungen 35 zur Abstützung und lösbaren Befestigung von Biegewerkzeugen 36, 37 auf. Wie aus dem Stand der Technik bekannt, bilden diese Biegewerkzeuge 36, 37 im allgemeinen ein als Matrize 38 ausgebildetes Biegegesenk 39 und einen als Patrize 40 ausgebildeten Biegestempel 41 aus. Aus dem Stand der Technik ist es weiters bekannt, die Biegewerkzeuge 36, 37 in Sektionen zu unterteilen, wodurch sich eine leichte Variierbarkeit für eine Werkzeuglänge 42 ergibt, um diese den jeweiligen Erfordernissen anpassen zu können bzw. auch um die Umrüstung der Fertigungseinrichtung 1 oder den Austausch der Biegewerkzeuge 36, 37 einfacher vornehmen zu können.

Die Werkzeugaufnahmevorrichtungen 35 in den Pressenbalken 15, 16 sind einerseits zur lösbaren Befestigung der Biegewerkzeuge 36, 37 ausgebildet, andererseits bilden sie Stützflächen 43 zur Übertragung der Biegekräfte - gemäß Pfeil 44 - aus.

Wie weiters der Fig. 1 zu entnehmen, ist die Fertigungseinrichtung 1 mit einer Sicherheitseinrichtung 45 versehen, die mit einer Maschinensteuereinrichtung 46 leitungsverbunden ist und aus einem Strahlensender 47 und einem Strahlenempfänger 48 und einem bevorzugt in der Maschinensteuereinrichtung 46 integriert angeordneten Steuergerät 49 besteht. Der Strahlensender 47 und Strahlenempfänger 48 sind mit dem verstellbaren Pressenbalken 16 bewegungsfest verbunden und bevorzugt für Lichtstrahlen 50 ausgelegt. Zur Sicherheitsüberwachung des gesamten Arbeitsbereiches werden die Lichtstrahlen 50 parallel zum Werkzeugverlauf und über die gesamte Länge 17 der Pressenbalken 15, 16 geführt. Bevorzugt sind es mehrere parallel zueinander verlaufende Lichtstrahlen 50, die eine Art Lichtvorhang ausbilden, der in einer zur Aufstandsfläche 9 parallel verlaufenden Ebene angeordnet ist. Der Strahlensender 47 und Strahlenempfänger 48 sind mit einander zugewandten Sende- und Empfangsoptiken im Endbereich am verstellbaren Pressenbalken 16 mittels einer Haltevorrichtung 51 lösbar befestigt.

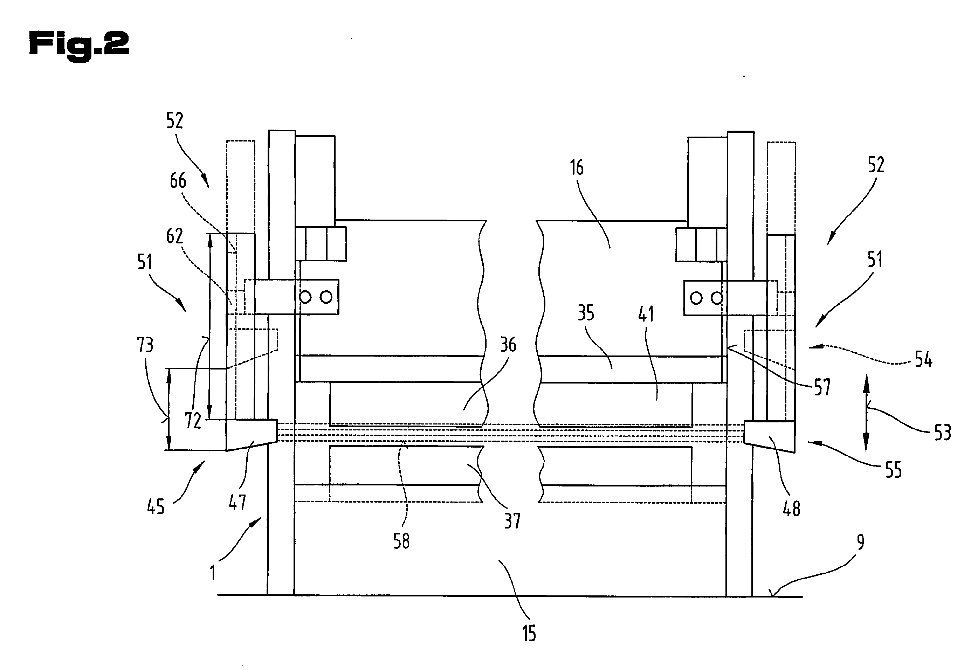

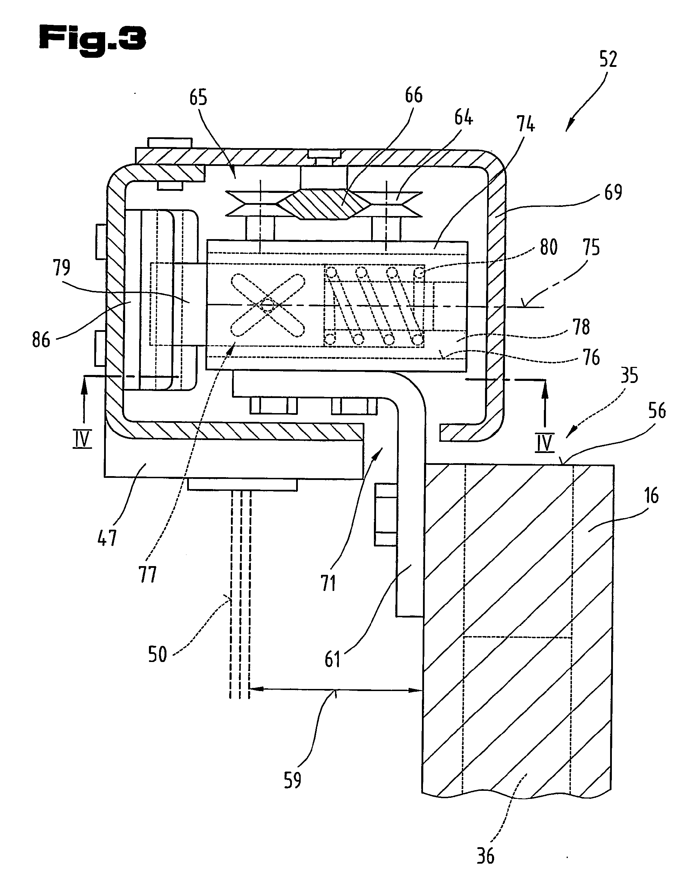

In den Fig. 2 bis 4 ist nun im Detail an der Fertigungseinrichtung 1 die Sicherheitseinrichtung 45, bestehend aus dem Strahlensender 47 und dem Strahlenempfänger 48 gezeigt. Die Haltevorrichtung 51 zur Positionierung des Strahlensenders 47 und Strahlenempfängers 48 in Bezug auf die Biegewerkzeuge 36, 37 und damit der Arbeitsebene 14 sind als Stellvorrichtungen 52 ausgebildet, die eine einfache Verstellung des Strahlensenders 47 und Strahlenempfängers 48 in zur Aufstandsfläche 9 senkrecht verlaufenden Richtung, gemäß einem Doppelpfeil 53, ohne der Anwendung von Werkzeugen zwischen einer, wie in strichlierten Linien gezeigten Parkposition 54 und einer oder mehreren Arbeitspositionen 55, ermöglichen.

Erwähnt sei, dass zumindest eine Stellvorrichtung 52 für den Strahlensender 47 oder dem Strahlenempfänger 48 vorgesehen ist. In gezeigten Ausführungsbeispiel ist sowohl der Strahlensender 47 wie auch der Strahlenempfänger 48 über die mit der Stellvorrichtung 52 versehene Haltevorrichtung 51 mit dem verstellbaren Pressenbalken 16 verbunden die im Wesentlichen jeweils entgegengesetzten Stirnseitenflächen 56, 57 des Pressenbalkens 16 zugeordnet.

Die Sicherheitseinrichtung 45 mit dem Strahlensender 47 und Strahlenempfänger 48 bildet einen Strahlenvorhange 58 in einem vorgegebenen Abstand 59 zu einer einer Bedienperson zugewandten Oberfläche 60 des Pressenbalkens 16 auf Höhe der Arbeitsebene 14 aus.

Die Stellvorrichtungen 52 für den Strahlensender 47 und den Strahlenempfänger 48 sind, sieht man von der spiegelbildlichen Anordnung am Pressenbalken 16 ab, ident ausgebildet womit in der weiteren Beschreibung der Hinweis, ob es sich bei der Stellvorrichtung 52 um jene für den Strahlensender 47 oder den Strahlenempfänger 48 handelt, unterbleiben kann.

Die Stellvorrichtung 52 bildet nach dem gezeigten Ausführungsbeispiel einerseits eine mittels einem Haltewinkel 61 am Pressenbalken 16, insbesondere dessen Oberfläche 60, befestigte Führungs- und Arretiervorrichtung 62 mit einer Führungsanordnung 63, z.B. Rollen 64 und andererseits eine in der Führungsanordnung 63 in zur Aufstandsfläche 9 in senkrecht verlaufender Richtung verstellbar gelagerte Führungsschiene 66 die in einem durch Profile 67 gebildeten Gehäusemantel 68 angeordnet ist. In einem der Aufstandsfläche 9 zugewandten Endbereich 69 ist am Gehäusemantel 68 eine Trägerplatte 70 zur Befestigung des Strahlensenders 47 bzw. Strahlenempfängers 48 angeordnet. Die Führungsschiene 66 sowie die Führungs- und Arretiervorrichtung 62 sind vom Gehäusemantel 68 bereichsweise ummantelt. Für die Verstellbarkeit weist der Gehäusemantel 68 im Bereich des ausragenden Haltewinkels 61 eine längsverlaufenden Schlitz 71 auf. Eine Länge 72 der Führungsschiene 66, wie auch des Gehäusemantels 68, ist größer als ein maximaler Verstellbereich 73 zwischen der Parkposition 54 und der Arbeitsposition 55.

In einem blockförmigen Gehäuse 74 der Führungs- und Arretiervorrichtung 62 ist mit einer zur Oberfläche 60 senkrecht verlaufenden Mittelachse 75 eine das Gehäuse 74 querende Bohrung 76 angeordnet in der eine Verriegelungseinrichtung 77 bestehend aus einem hülsenförmigen Führungsgehäuse 78 und einem darin verstellbar gelagerten bolzenförmigen Riegelelement 79 angeordnet ist. Das Riegelelement 79 ist durch eine Federanordnung 80 z.B. Druckfeder in Richtung des Gehäusemantels 68 vorgespannt und überragt eine dem Gehäusemantel 68 zugewandte Seitenfläche 81 des Gehäuses 74.

Weiter ist das Riegelelement 79 im Führungsgehäuse 78 um die Mittelachse 75 drehbar in einer Kulissenführung 82 des Gehäuseteils 78 gelagert. Bei Aufbringung einer Stellkraft gemäß - Pfeil 83 - wird dadurch eine kombinierte Linear- und Drehbewegung des Riegelelementes 79 erreicht und durch die Ausbildung der Kulissenführung 82 nimmt das Riegelelement 79 jeweils eine von zwei vorgegebenen Stellpositionen in Verstellrichtung ein wodurch ein Überstand 84 einer Stirnfläche 85 des Riegelelementes 79 zur Seitenfläche 81 des Gehäuses 74 in zwei Positionen variiert bzw. umstellbar ist.

Derartige Verriegelungseinrichtungen 77, bei der ein bolzenförmiges Riegelelement 79 bei einer Betätigung in Richtung einer Mittelachse zwischen zwei Ausfahrpositionen verstellbar ist, sind aus dem Stand der Technik bekannt, beispielsweise funktioniert nach diesem Prinzip die Betätigung einer Kugelschreibermiene mittels eines Druckbolzens. Auch sind ähnliche Lösungen aus dem Sachgebiet der Möbelbeschläge für Klapptüren, Glastüren etc. bekannt.

Daher ist eine weitere Beschreibung der dazu vorgesehenen Mechanik nicht erforderlich.

Zur Betätigung der Verriegelungseinrichtung 77 bzw. des Riegelelementes 79 ist im Gehäusemantel 68, der Stirnfläche 85 des Riegelelements 79 zugewandt, ein Anschlag- und Schaltmittel 86 angeordnet, das zwei in Verstellrichtung gemäß - Doppelpfeil 53 - zueinander beabstandete, zu einer inneren Oberfläche 87 des Gehäusemantels 68 im Wesentlichen geneigt verlaufende Stellmittel 88 ausbildet, die über die innere Oberfläche 87 in Richtung der Stirnfläche 85 des Riegelelements 79 unterschiedlich vorragen wobei ein einen Halteanschlag 89 ausbildendes Stellmittel 88 einen größeren Abstand zur Seitenfläche 81 des Gehäuses 74 aufweist und das weitere, dem Endbereich 67 der Haltevorrichtung 51 zugewandte Stellmittel 88 mit einer zur Seitenfläche 81 parallel verlaufenden Schaltfläche 90 einen geringeren Abstand 91 zur Seitenfläche 81 aufweist.

Zur Funktion der Verriegelungseinrichtung 77 wird vermerkt, dass diese eine Umstellung der Sicherheitseinrichtung 45 bzw. des Strahlensenders 47 und/oder Strahlenempfängers 48 mittels Einhandbedienung zwischen der Arbeitsposition 55 und Parkposition 54 und umgekehrt ohne Werkzeuge oder Demontage ermöglicht.

Damit wird ein rascher Umrüstvorgang des Pressenbalkens 16 durch die mögliche Bestückung der Werkzeugaufnahmevorrichtung 35 über die frei zugängliche Stirnseitenfläche 56, insbesondere für größeren und schwerere Biegewerkzeuge 36, 37 erreicht. Nach erfolgter Umrüstung ist eine ebenso einfache Umstellung in die Arbeitsposition 55 mittels Einhandbedienung gegeben.

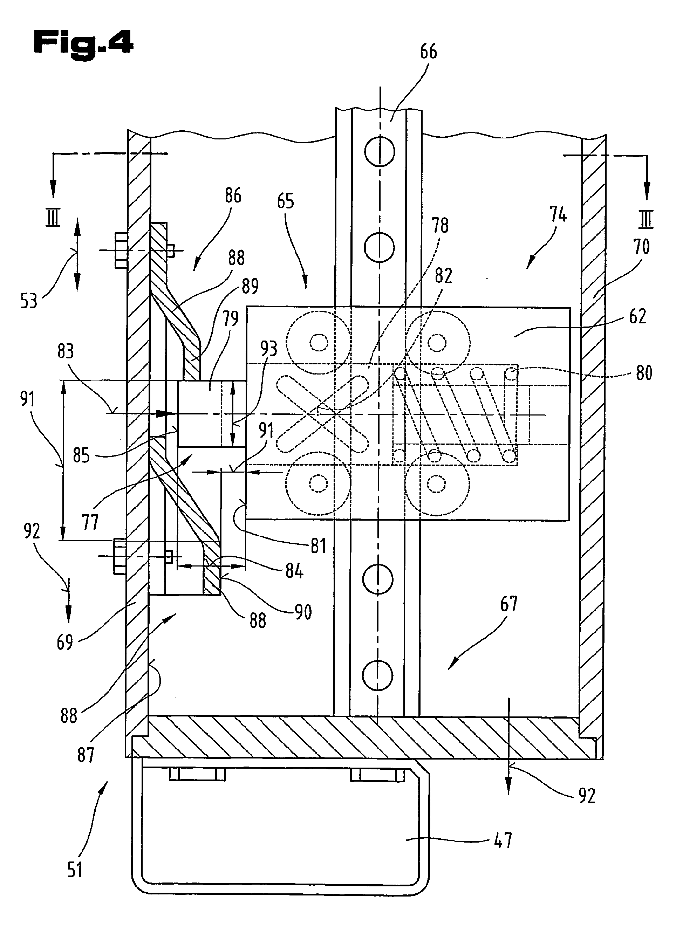

In der in der Fig. 4 dargestellten Stellung des Riegelelementes 79 befindet sich die Haltevorrichtung 51, beispielsweise mit dem Strahlensender 47 in der sogenannten Parkposition 54. Dabei ist das bolzenförmige Riegelelement 79 in ausgefahrener Stellung zur Seitenfläche 81 des Gehäuses 74. Der Gehäusemantel 68 mit dem Strahlensender 47 ist über den auskragenden Halteanschlag 89 am Riegelelement 79 abgestützt. Um den Strahlensender 47 in die Arbeitsposition 55, gemäß - Pfeil 92 - abzusenken, erfolgt vorerst ein Anheben der Haltevorrichtung 51 wodurch das Riegelelement 79 durch das geneigt verlaufende Stellmittel 88 und letztlich der Schaltfläche 90 in eingefahrene Position entgegen der Wirkung der Federanordnung 80 verstellt wird und durch die Kulissenführung 82 zwischen dem Riegelelement 79 und Führungsgehäuse 78 in der eingefahrenen Position verrastet. Damit kann die Abwärtsbewegung in Richtung gemäß - Pfeil 92 - in die Arbeitsposition 55, ohne dass das Riegelelement 79 mit dem Halteanschlag 89 kollidiert, erfolgen.

Um aus der abgesenkten Arbeitsposition 55 wieder die Parkposition 54 einzunehmen, erfolgt ein Anheben, wobei durch einen neuerlichen Kontakt zwischen dem Stellmittel 88 bzw. dessen Schaltfläche 90 und dem Riegelelement 79 der Entriegelungsvorgang erfolgt und das Riegelelement 79 nach einem geringfügigen Absenken der Haltevorrichtung 51 die Ausfahrposition einnimmt und damit der Halteanschlag 89 zur Wirkung kommt.

Wesentlich dabei ist, dass der in Verstellrichtung- gemäß Doppelpfeil 53 - gemessener Abstand 91 zwischen dem Halteanschlag 89 und der Schaltfläche 90 größer ist als ein Durchmesser 93 des Riegelelements 79.

Zu der vorhergehend beschriebenen Verriegelungseinrichtung 77 mit dem Riegelelement 79 sei ergänzend vermerkt, dass selbstverständlich auch weitere aus dem Stand der Technik bekannte Lösungen wie z.B. in Hakenform ausgebildete Riegelelemente zur Anwendung gelangen können wie beispielsweise bei nach oben zu öffnende und in der Öffnungslage zu haltende Klappen an Hängeschränken. Auch dabei wird eine Einhandbedienung erzielt bei der durch ein geringfügiges weiteres Anheben der Klappe das Riegelelement in seine Ruhelage mittels Federkraft verstellt wird und damit die Klappe in Schließstellung geschwenkt werden kann.

Erwähnt wird noch, dass durch einfach und bedarfsgerecht verstellbare Anschlagmittel z.B. an der Führungsschiene 66 in vorgegebenen Positionen einsteckbare Stifte, unterschiedliche Arbeitspositionen, angepasst an die jeweils zur Anwendung gelangenden Werkzeughöhen der Biegewerkzeuge 36, 37, ohne aufwendige Positioniermaßnahme oder Manipulation nach einer Umrüstung einfach erreicht werden.

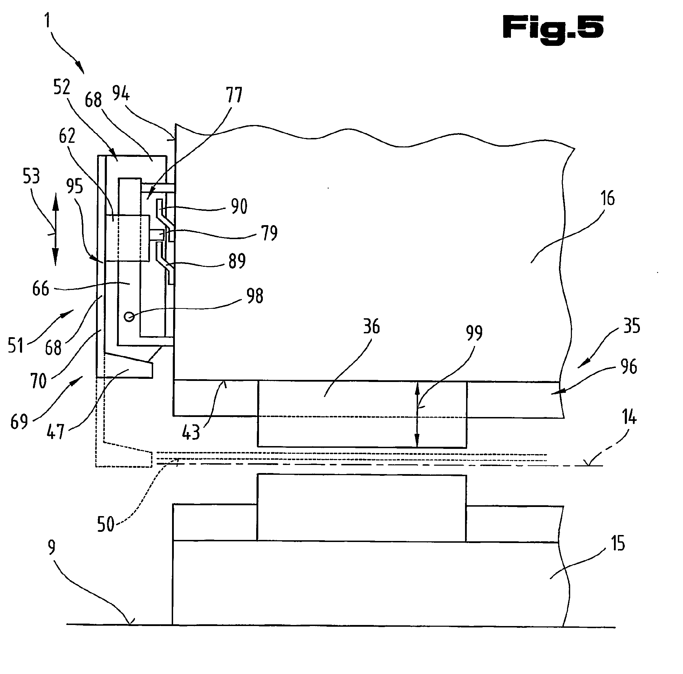

In der Fig. 5 ist eine weitere Ausführung der Haltevorrichtung 51 mit der Stellvorrichtung 52 an dem verstellbaren Pressenbalken 16 der Fertigungseinrichtung 1 gezeigt. Gemäß dieser Ausführung ist auf zumindest einer Stirnseitenfläche 94 des Pressenbalkens 16 eine Linearführung 95, z.B. die Führungsschiene 66, befestigt und damit mit dem Pressenbalken 16 bewegungsverbunden, wodurch die Relativposition des Strahlensenders 47 und/oder Strahlenempfängers 48 und damit der Lichtstrahlen 50 in festgelegter Lage bezüglich der Arbeitsebene 14 bzw. in Relation zu dem im verstellbaren Pressenbalken 16 angeordneten Biegewerkzeug 36 festliegt.

Auf der Führungsschiene 66 ist die Führungs- und/Arretiervorrichtung 62 in zur Aufstandsfläche 9 senkrecht verlaufenden Richtung- gemäß dem Doppelpfeil 53 - und damit relativ zum Pressenbalken 16 verstellbar gelagert. Der Strahlensender 47 und/oder Strahlenempfänger 48 ist über den Gehäusemantel 68 mit der Führungs- und Arretiervorrichtung 62 verbunden. Der Führungs- und Arretiervorrichtung 62 zugewandt, ist an der Stirnseitenfläche 94 des Pressenbalkens 16 das Anschlag- und Schaltmittel 86 gebildet durch den Halteanschlag 89 und dem Stellmittel 88 für die Betätigung des Riegelelementes 79 der Verriegelungseinrichtung 77 befestigt.

Wie nunmehr der Fig. 5 zu entnehmen, ist die Anbringung des Anschlag- und Schaltmittels 86 am Pressenbalken 16 und die Anordnung der Führungs- und Arretiervorrichtung 62 im Gehäusemantel 68 mit dem an diesen befestigten Strahlensender 47 und/oder Strahlenempfänger 48 darauf abgestimmt, dass bei Einnehmen der arretierten Parkposition 54 - eine Ebene in der die Stützfläche 43 einer nutförmige Aufnahme 96 der Werkzeugaufnahmevorrichtung 35 verläuft vom Strahlensender 47 nicht in Richtung der Arbeitsebene 14 überlappt wird, d.h., dass die Aufnahme 96 von der Stirnseitenfläche 94 her frei zugänglich ist, wodurch ein seitliches Einführen des Biegewerkzeuges 36 und damit Bestücken des Pressenbalkens 16 mittels Hilfsvorrichtungen, insbesondere bei größeren und schwereren Biegewerkzeugen 36, erreicht wird.

Wie bereits vorhergehend erwähnt ist es mittels variierbarer Anschlagmittel 97, z.B. in die Führungsschiene 66 einsetzbare Stifte 98 möglich, unterschiedliche Arbeitspositionen 55, wie z.B. eine in strichlierten Linien gezeichnete Position, entsprechend einer variierbaren Höhe 99 des Biegewerkzeuges 36, zu wählen und damit die in Richtung der Aufstandsfläche 9 relativ zum Pressenbalken 16 abgesenkte Position der Haltevorrichtung 51 und damit Strahlensender 47 und/oder Strahlenempfänger 48 zu erreichen.

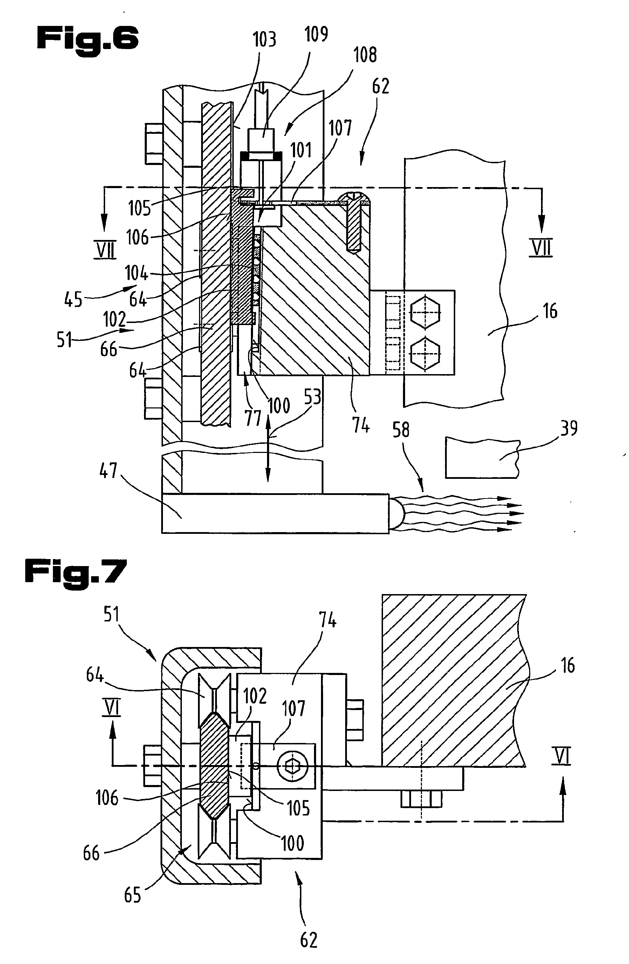

In den Fig. 6 und 7 ist eine weitere Ausführung der Führungs- und Arretiervorrichtung 62 der Sicherheitseinrichtung 45 gezeigt. Wie bereits in den vorhergehenden Figuren beschrieben, wird durch einen Strahlenvorhang 58 zwischen einem Strahlensender 47 und den in den Fig. 6 und 7 nicht weiter dargestellten gegenüberliegenden Strahlenempfänger eine bekannte Maßnahme, bei einer Unterbrechung des Strahlenvorhangs 58 die Bewegung des verstellbaren Pressenbalkens 16 zu stoppen, gesetzt. Um die Sicherheit zu gewährleisten, ist es erforderlich, den Strahlenvorhang 58 auf Position des Biegewerkzeuges 39 einzujustieren. Dies ermöglicht in einfacher Weise die Führungs- und Arretiervorrichtung 62 mit der verstellbaren Haltevorrichtung 51 für den Strahlensender 47 bzw. auch den gegenüberliegenden Strahlenempfänger. Im dargestellten Ausführungsbeispiel weist die Haltevorrichtung 51 die Führungsschiene 66 auf und ist über diese in dem durch Rollen 64 gebildeten Führungsapparat 65 des Gehäuses 74 in Verstellrichtung gemäß - Doppelpfeil 53 - verstellbar geführt. Die Verriegelungseinrichtung 77 wird bei dieser Ausbildung durch ein im Gehäuse 74, welches am verstellbaren Pressenbalken 16 befestigt ist, in einer Führungsbahn 100 einer Führung 101 des Gehäuses 74 verstellbares Keilelement 102 gebildet, das in einem Keilspalt zwischen einer Stützfläche des Gehäuses 74 und einer dieser gegenüberliegenden Oberfläche 103 der Führungsschiene 66 angeordnet ist. Die Führungsbahn 100 verläuft dabei entsprechend einem Keilanzug des Keilelements 102 geneigt bzw. in einem Keilwinkel zu der Oberfläche 103. Zwischen dem Keilelement 102 und der Führungsbahn 100 sind Rollelemente 104 zur Verminderung der Reibung zwischen dem Keilelement 102 und der Führungsbahn 100 vorgesehen. Dagegen wirkt an einander gegenüberliegenden Anlageflächen 105, 106 zwischen dem Keilelement 102 und der Oberfläche 103 ein höherer Reibwert. Dadurch wird bei einer Abwärtsbewegung der Haltevorrichtung 51 das Keilelement 102 in den Keilspalt mitgenommen und verursacht eine Klemmhalterung, die eine weitere Abwärtsbewegung der Haltevorrichtung 51 selbsttätig verhindert. Um einen Spielausgleich zu bewirken, ist das Keilelement mittels einer Blattfeder 107 in den Keilspalt vorgespannt wozu eine geringe Federkraft ausreichend ist. Um bei einer beabsichtigten Verstellung der Haltevorrichtung 51 in eine Arbeitsposition die Klemmwirkung aufzuheben, ist ein Stellmittel 108, z.B. ein Seilzug 109, vorgesehen mittels dem das Keilelement 102 entgegen der Wirkung der Federkraft der Blattfeder 107 geringfügig angehoben wird. Durch die damit erreichte Verringerung der Klemmwirkung kann die Haltevorrichtung 51 in eine abgesenkte Position verstellt werden. Die umgekehrte Bewegung der Haltevorrichtung - also in die obere Parkposition - ist ohne Betätigung des Stellmittels 108 möglich, da bei einer Aufwärtsbewegung der Haltevorrichtung 51 durch die unterschiedlichen Reibwerte bei einer derartigen Bewegung die Klemmwirkung selbsttätig verringert wird.

Generell wird noch darauf verwiesen, dass die beschriebene Haltevorrichtung 51 mit der Stellvorrichtung 52 sowohl für den Strahlensender 47 als auch für den Strahlenempfänger 48 zur Anwendung gelangen kann. Es ist aber auch durchaus möglich die Haltevorrichtung 51 nur für einen der Beiden Einrichtungen mit der Stellvorrichtung 52 zu versehen.

Die Ausführungsbeispiele zeigen mögliche Ausführungsvarianten der Fertigungseinrichtung mit der über eine Haltevorrichtung und Stellvorrichtung verstellbaren Sicherheitseinrichtung,

Der Ordnung halber sei abschließend darauf hingewiesen, dass zum besseren Verständnis des Aufbaus der Sicherheitseinrichtung diese bzw. deren Bestandteile teilweise unmaßstäblich und/oder vergrößert und/oder verkleinert dargestellt wurden.

### Bezugszeichenaufstellung

- 1: Fertigungseinrichtung
- 2: Abkantpresse
- 3: Blechteil
- 4: Profil
- 5: Maschinengestell

- 6: Ständer-Seitenwange
- 7: Ständer-Seitenwange
- 8: Dämpfungselement
- 9: Aufstandfläche
- 10: Bodenplatte

- 11: Abstand
- 12: Mittelachse
- 13: Wandteil
- 14: Arbeitsebene
- 15: Pressenbalken

- 16: Pressenbalken
- 17: Länge
- 18:
- 19: Befestigungsanordnung
- 20: Stirnfläche

- 21: Schenkel
- 22: Seitenfläche
- 23: Seitenfläche
- 24: Schenkel
- 25: Stellantrieb

- 26: Stellantrieb
- 27: Antriebsanordnung
- 28: Hydraulikzylinder
- 29: Stellelement
- 30: Führungsanordnung

- 31: Gelenldager
- 32: Bolzen
- 33: Seitenfläche
- 34: Seitenfläche
- 35: Werkzeugaufnahmevorrichtung

- 36: Biegewerkzeug
- 37: Biegewerkzeug
- 38: Matrize
- 39: Biegegesenk
- 40: Patrize

- 41: Biegestempel
- 42: Werkzeuglänge
- 43: Stützfläche
- 44: Pfeil
- 45: Sicherheitseinrichtung

- 46: Maschinensteuereinrichtung
- 47: Strahlsender
- 48: Strahlenempfänger
- 49: Steuergerät
- 50: Lichtstrahl

- 51: Haltevorrichtung
- 52: Stellvorrichtung
- 53: Doppelpfeil
- 54: Parkposition
- 55: Arbeitsposition

- 56: Stirnseitenfläche
- 57: Stirnseitenfläche
- 58: Strahlenvorhang
- 59: Abstand
- 60: Oberfläche

- 61: Haltewinkel
- 62: Führungs- und Arretiervorrichtung
- 63: Führungsanordnung
- 64: Rolle
- 65: Führungsapparat

- 66: Führungsschiene
- 67: Profil
- 68: Gehäusemantel
- 69: Endbereich
- 70: Trägerplatte

- 71: Schlitz
- 72: Länge
- 33: Verstellbereich
- 74: Gehäuse
- 75: Mittelachse

- 76: Bohrung
- 77: Verriegelungseinrichtung
- 78: Führungsgehäuse
- 79: Riegelelement
- 80: Federanordnung

- 81: Seitenfläche
- 82: Kulissenführung
- 83: Pfeil
- 84: Überstand
- 85: Stirnfläche

- 86: Anschlag- und Schaltmittel
- 87: Oberfläche
- 88: Stellmittel
- 89: Halteanschlag
- 90: Schaltfläche

- 91: Abstand
- 92: Pfeil
- 93: Durchmesser
- 94: Stirnseitenfläche
- 95: Linearführung

- 96: Aufnahme
- 97: Anschlagmittel
- 98: Stift
- 99: Höhe
- 100: Führungsbahn

- 101: Führung
- 102: Keilelement
- 103: Oberfläche
- 104: Rollelemente
- 105: Anlagefläche

- 106: Anlagefläche
- 107: Blattfeder
- 108: Stellmittel
- 109: Seilzug

## Patentansprüche

1. Fertigungsmaschine (1), z.B. Abkantpresse, mit einer Sicherheitseinrichtung (45), insbesondere Strahlensende- und Strahlenempfangsvorrichtung, mit zumindest einer als Stellvorrichtung (52) ausgebildeten Haltevorrichtung (51) für die Sicherheitseinrichtung (45) an einem mit Biegewerkzeugen (36, 37) in einer Werkzeugaufnahmevorrichtung (35) bestückbaren Pressenbalken (15, 16) wobei die Stellvorrichtung (52) den Strahlensender (47) und/oder Strahlenempfänger (48) in zu einer Aufstandsfläche (9) senkrecht verlaufenden Richtung zwischen zumindest einer Arbeitsposition (55) und einer Parkposition (54) in einer Führungsanordnung (63) zum Pressenbalken (15, 16) relativ verstellbar haltert, **dadurch gekennzeichnet, dass** die Stellvorrichtung (52) eine ein Riegelelement (79) einer Verriegelungseinrichtung (77) aufweisende, zwischen einer Lösestellung und einer Haltestellung umschaltbare Führungs- und Arretiervorrichtung (62) aufweist, und die Haltevorrichtung (51) für den Strahlensender (47) und/oder den Strahlempfänger (48) in Relation zum Pressenbalken (16) in der Parkposition (54) bei einer Linearverstellung in zur Arbeitsebene (14) entgegengesetzter Richtung bei Erreichen der Parkposition (54) selbsttätig verriegelt.

2. Fertigungsmaschine (1) nach Anspruch 1, **dadurch gekennzeichnet, dass** die Führungs- und Arretiervorrichtung (62) am verstellbaren Pressenbalken (16) bewegungsfest angeordnet ist.

3. Fertigungsmaschine (1) nach Anspruch 1, **dadurch gekennzeichnet, dass** die Führungs- und Arretiervorrichtung (62) an der Haltevorrichtung (51) bewegungsfest angeordnet ist.

4. Fertigungsmaschine (1) nach einem der vorhergehenden Ansprüche, **dadurch gekennzeichnet, dass** das Riegelelement (79) in der Führungs- und Arretiervorrichtung (62) in zur Verstellrichtung der Haltevorrichtung (51) senkrecht verlaufenden Richtung verstellbar angeordnet ist.

5. Fertigungsmaschine (1) nach einem der vorhergehenden Ansprüche, **dadurch gekennzeichnet, dass** das Riegelelement (79) in einem in einer Bohrung (76) eines Gehäuses (74) der Führungs- und Arretiervorrichtung (62) angeordnetem Führungsgehäuse (78) angeordnet ist.

6. Fertigungsmaschine (1) nach Anspruch 5, **dadurch gekennzeichnet, dass** das Riegelelement (79) in dem Führungsgehäuse (78) über eine Kulissenführung (82) verstellbar gelagert ist.

7. Fertigungsmaschine (1) nach einem der vorhergehenden Ansprüche 5 oder 6, **dadurch gekennzeichnet, dass** das Riegelelement (79) mittels einer zwischen diesem und dem Führungsgehäuse (78) wirkenden Federanordnung (80) z.B. eine Druckfeder eine Seitenfläche (81) des Gehäuses (74) in Richtung eines Anschlag- und Schaltmittels (86) überragend vorgespannt ist.

8. Fertigungsmaschine (1) nach Anspruch 7, **dadurch gekennzeichnet, dass** das Anschlag- und Schaltmittel (86) an der Haltevorrichtung (51) befestigt ist.

9. Fertigungsmaschine (1) nach einem der Ansprüche 7 oder 8, **dadurch gekennzeichnet, dass** das Anschlag- und Schaltmittel (86) am Pressenbalken (16) befestigt ist.

10. Fertigungsmaschine (1) nach einem der vorhergehenden Ansprüche, **dadurch gekennzeichnet, dass** eine Führungsschiene (66) für die Führungs- und Arretiervorrichtung (62) mit dem Pressenbalken (16) bewegungsverbunden ist.

11. Fertigungsmaschine (1) nach Anspruch 10, **dadurch gekennzeichnet, dass** die Führungsschiene (66) mit der Haltevorrichtung (51) bewegungsverbunden ist.

12. Fertigungsmaschine (1) nach einem der vorhergehenden Ansprüche 7 bis 11, **dadurch gekennzeichnet, dass** das Anschlag- und Schaltmittel (86) bei Verstellung der Führungs- und Arretiervorrichtung (62) in Verstellrichtung durch auf eine Stirnfläche (85) des Riegelelementes (79) in Erstreckungsrichtung einer Mittelachse (75) entgegen der Wirkung der Federanordnung (80) eine Stellkraft bewirkende Stellmittel (88) ausbildet.

13. Fertigungsmaschine (1) nach einem der vorhergehenden Ansprüche, **dadurch gekennzeichnet, dass** ein Stellmittel (88) als Halteanschlag (89) zur Abstützung des Riegelelementes (79) bzw. der Haltevorrichtung (51) in Richtung der Aufstandsfläche (9) ausbildet.

14. Fertigungsmaschine (1) nach Anspruch 13, **dadurch gekennzeichnet, dass** in einen in Verstellrichtung der Haltevorrichtung (51) gemessenen Abstand (92) zum Halteanschlag (89) in Richtung zur Aufstandsfläche (9) das weitere eine zur Verstellrichtung parallel verlaufende Schaltfläche (90) ausbildende Stellmittel (88) angeordnet ist.

15. Fertigungsmaschine (1) nach Anspruch 14, **dadurch gekennzeichnet, dass** das die Stellmittel (88) ausbildende Anschlag- und Schaltmittel (86) durch eine einstückige Blechausbildung gebildet ist.

16. Fertigungsmaschine (1) nach einem der vorhergehenden Ansprüche 10 bis 15, **dadurch gekennzeichnet, dass** die Führungsschiene (66) mit der Führungs- und Arretiervorrichtung (62) in einem durch zumindest einem Profil (67) gebildeten Gehäusemantel (68) angeordnet ist.

17. Fertigungsmaschine (1) nach Anspruch 16, **dadurch gekennzeichnet, dass** in einem der Aufstandsfläche zugewandtem Endbereich (69) am Gehäusemantel (68) eine zur Aufstandsfläche (9) Parallel ausgerichtete Trägerplatte (70) für den Strahlensender (47) und/oder den Strahlenempfänger (48) angeordnet ist.

18. Fertigungsmaschine (1) nach einem der vorhergehenden Ansprüche 16 oder 17, **dadurch gekennzeichnet, dass** im Gehäusemantel (68) zur Energie- und Datenübertragung Leitungen zwischen dem Strahlensender (47) und/oder Strahlenempfänger (48) und einer Ausgangsschnittstelle angeordnet sind.

19. Fertigungsmaschine (1) nach Anspruch 18, **dadurch gekennzeichnet, dass** die Leitungen auf einer im Gehäusemantel (68) angeordneten Leitungsführungskette verlegt sind.

20. Fertigungsmaschine (1) nach einem der vorhergehenden Ansprüche 18 oder 19, **dadurch gekennzeichnet, dass** die Ausgangsschnittstelle mit der Maschinensteuereinrichtung (46) leitungsverbunden ist.

21. Fertigungsmaschine (1) nach einem der vorhergehenden Ansprüche, **dadurch gekennzeichnet, dass** ein Verstellweg der Haltevorrichtung (51) ausgehend von der Parkposition (54) zum Positionieren des Strahlensenders (47) und Strahlenempfängers (48) in unterschiedlichen Arbeitspositionen (55) durch Anschlagmitteln (97), z.B. durch in die Führungsschiene (66) einsetzbare Stifte (98), an unterschiedlichen Höhen (99) der Biegewerkzeuge (36) anpassbar ist.

22. Fertigungsmaschine (1) nach einem der vorhergehenden Ansprüche 5 bis 21, **dadurch gekennzeichnet, dass** die Verriegelungseinrichtung (77) durch ein im Gehäuse (74) der Führungs- und Arretiervorrichtung (62) verstellbar gelagertes Keilelement (102) gebildet ist.

23. Fertigungsmaschine (1) nach Anspruch 22, **dadurch gekennzeichnet, dass** das Keilelement (102) in Verstellrichtung der Haltevorrichtung (51) in einer Führung (101) des Gehäuses (74) verstellbar ist.

24. Fertigungsmaschine (1) nach Anspruch 23, **dadurch gekennzeichnet, dass** Führungsbahnen (100) der Führung (101) für das Keilelement (102) zu der durch die Führungsschiene (66) gebildeten Stellrichtung der Haltevorrichtung (51) winkelig verlaufen.

25. Fertigungsmaschine (1) nach einem der Ansprüche 23 oder 24, **dadurch gekennzeichnet, dass** das Keilelement (102) in der Führung (101) über Rollelemente (104) abgestützt ist.

26. Fertigungsmaschine (1) nach einem der Ansprüche 5 bis 25, **dadurch gekennzeichnet, dass** das Keilelement (102) über Stellmittel (108), z.B. Seilzug einem Seilzug (109) und/oder einem Hebelelement aus einer Klemmstellung, bei der die Haltevorrichtung (51) gegenüber dem Gehäuse (74) positioniert ist, in eine Freigabestellung verstellbar ist.

## Claims

1. Manufacturing machine (1), e.g. a bending press, with a safety device (45), in particular a beam emitting and beam receiving device, with at least one retaining mechanism (51) provided in the form of an adjusting mechanism (52) for the safety device (45) on a press beam (15, 16) which can be fitted with bending tools (36, 37) in a tool mounting device (35), and the adjusting mechanism (52) retains the beam emitter (47) and/or beam receiver (48) in a guiding arrangement (63) so that it can be displaced relative to the press beam (15, 16) in a direction extending perpendicular to a standing surface (9) between at least one working position (55) and a park position (54), **characterised in that** the adjusting mechanism (52) has a guiding and locking device (62) incorporating a locking element (79) of a locking device (77) which can be switched between a released position and a retained position, and, on reaching the park position (54) having effected a linear displacement in the direction opposite the working plane (14), the retaining mechanism (51) automatically locks in the park position (54) relative to the press beam (16).

2. Manufacturing machine (1) as claimed in claim 1, **characterised in that** the guiding and locking device (62) is disposed in a stationary arrangement on the adjustable press beam (16).

3. Manufacturing machine (1) as claimed in claim 1, **characterised in that** the guiding and locking device (62) is disposed in a stationary arrangement on the retaining mechanism (51).

4. Manufacturing machine (1) as claimed in one of the preceding claims, **characterised in that** the locking element (79) is disposed in the guiding and locking device (62) so that it can be displaced in the direction extending perpendicular to the retaining mechanism (51).

5. Manufacturing machine (1) as claimed in one of the preceding claims, **characterised in that** the locking element (79) is disposed in a guide housing (78) disposed in a bore (76) of a housing (74) of the guiding and locking device (62).

6. Manufacturing machine (1) as claimed in claim 5, **characterised in that** the locking element (79) is mounted in the guide housing (78) so that it can be displaced by means of a sliding guide (82).

7. Manufacturing machine (1) as claimed in one of preceding claims 5 or 6, **characterised in that** the locking element (79) is biased by means of a spring arrangement (80) acting between it and the guide housing (78), e.g. a compression spring, so that it extends out from a side face (81) of the housing (74) in the direction of a stop and switching means (86).

8. Manufacturing machine (1) as claimed in claim 7, **characterised in that** the stop and switching means (86) is secured on the retaining mechanism (51).

9. Manufacturing machine (1) as claimed in one of claims 7 or 8, **characterised in that** the stop and switching means (86) is secured on the press beam (16).

10. Manufacturing machine (1) as claimed in one of the preceding claims, **characterised in that** a guide rail (66) for the guiding and locking device (62) is connected so that it is moved with the press beam (16).

11. Manufacturing machine (1) as claimed in claim 10, **characterised in that** the guide rail (66) is connected so that it is moved with the retaining mechanism (51).

12. Manufacturing machine (1) as claimed in one of preceding claims 7 to 11, **characterised in that** the stop and switching means (86) comprises adjusting means (88) which generate an adjusting force on an end face (85) of the locking element (79) in the direction of extension of a middle axis (75) opposing the action of the spring arrangement (80) when the guiding and locking device (62) is displaced in the displacement direction.

13. Manufacturing machine (1) as claimed in one of the preceding claims, **characterised in that** one adjusting means (88) comprises a retaining stop (89) for supporting the locking element (79) or retaining mechanism (51) in the direction of the standing surface (9).

14. Manufacturing machine (1) as claimed in claim 13, **characterised in that** the other adjusting means (88) comprising a switching surface (90) extending parallel with the displacement direction is disposed at a distance (92) from the retaining stop (89) as measured in the displacement direction of the retaining mechanism (51) in the direction towards the standing surface (9).

15. Manufacturing machine (1) as claimed in claim 14, **characterised in that** the stop and switching means (86) constituting the adjusting means (88) is provided in the form of a one piece sheet metal part.

16. Manufacturing machine (1) as claimed in one of preceding claims 10 to 15, **characterised in that** the guide rail (66) incorporating the guiding and locking device (62) is disposed in a housing sleeve (68) provided in the form of at least one section (67).

17. Manufacturing machine (1) as claimed in claim 16, **characterised in that** a support plate (70) for the beam emitter (47) and/or the beam receiver (48) aligned parallel with the standing surface (9) is disposed on the housing sleeve (68) in an end region (69) facing the standing surface.

18. Manufacturing machine (1) as claimed in one of preceding claims 16 or 17, **characterised in that** lines are provided in the housing sleeve (68) for transmitting energy and data between the beam emitter (47) and/or beam receiver (48) and an output interface.

19. Manufacturing machine (1) as claimed in claim 18, **characterised in that** the lines are laid on a line guiding chain disposed in the housing sleeve (68).

20. Manufacturing machine (1) as claimed in one of preceding claims 18 or 19, **characterised in that** the output interface is hard-wired to the machine control system (46).

21. Manufacturing machine (1) as claimed in one of the preceding claims, **characterised in that** a displacement path of the retaining mechanism (51) from the park position (54) in order to position the beam emitter (47) and beam receiver (48) in different working positions (55) can be adapted to suit different heights (99) of the bending tools (36) by stop means (97), e.g. by pins (98) which can be inserted in the guide rail (66).

22. Manufacturing machine (1) as claimed in one of preceding claims 5 to 21, **characterised in that** the locking device (77) is provided in the form of a wedge element (102) mounted so that it can be displaced in the housing (74) of the guiding and locking device (62).

23. Manufacturing machine (1) as claimed in claim 22, **characterised in that** the wedge element (102) can be displaced in a guide (101) of the housing (74) in the displacement direction of the retaining mechanism (51).

24. Manufacturing machine (1) as claimed in claim 23, **characterised in that** guide tracks (100) of the guide (101) for the wedge element (102) extend at an angle to the adjustment direction of the retaining mechanism (51) formed by the guide rail (66).

25. Manufacturing machine (1) as claimed in one of claims 23 or 24, **characterised in that** the wedge element (102) is supported in the guide (101) by roller elements (104).

26. Manufacturing machine (1) as claimed in one of claims 5 to 25, **characterised in that** the wedge element (102) can be moved by adjusting means (108), e.g. rope pull of a rope pull system (109) and/or a lever element, from a clamped position, in which the retaining mechanism (51) is positioned relative to the housing (74), into a release position.

## Revendications

1. Machine-outil (1), telle qu'une presse plieuse, comportant un dispositif de protection (45), en particulier un émetteur de rayons et un récepteur de rayons, comportant au moins un dispositif de fixation (51), réalisé sous forme de dispositif de réglage (52) pour le dispositif de protection (45), sur une barre (15, 16) de la presse, apte à recevoir des outils de pliage (36, 37) dans un porte-outil (35), le dispositif de réglage (52) supportant l'émetteur de rayons (47) et le récepteur de rayons (48) de manière mobile par rapport à la barre (15, 16) de la presse dans une direction perpendiculaire à une surface de fondation (9), entre au moins une position de travail (55) et une position d'attente (54) dans un système de guidage (63), **caractérisée en ce que** le dispositif de réglage (52) comporte un dispositif de guidage et d'arrêt (62), apte à commuter entre une position de déblocage et une position de fixation, muni d'un élément de verrouillage (79) du dispositif de verrouillage (77), et le dispositif de fixation (51) pour l'émetteur de rayons (47) et/ou le récepteur de rayons (48) verrouille automatiquement, en relation avec la barre (16) de la presse, dans la position d'attente (54) en cas d'atteinte de la position d'attente (54) lors d'un déplacement linéaire dans la direction opposée au plan de travail (14).

2. Machine-outil (1) selon la revendication 1, **caractérisée en ce que** le dispositif de guidage et d'arrêt (62) est monté solidaire en mouvement sur la barre (16) mobile de la presse.

3. Machine-outil (1) selon la revendication 1, **caractérisée en ce que** le dispositif de guidage et d'arrêt (62) est monté solidaire en mouvement sur le dispositif de fixation (51).

4. Machine-outil (1) selon l'une quelconque des revendications précédentes, **caractérisée en ce que** l'élément de verrouillage (79) est monté dans le dispositif de guidage et d'arrêt (62) de manière mobile dans la direction perpendiculaire à la direction de déplacement du dispositif de fixation (51).

5. Machine-outil (1) selon l'une quelconque des revendications précédentes, **caractérisée en ce que** l'élément de verrouillage (79) est disposé dans un caisson de guidage (78) monté dans un alésage (76) d'un carter (74) du dispositif de guidage et d'arrêt (62).

6. Machine-outil (1) selon la revendication 5, **caractérisée en ce que** l'élément de verrouillage (79) est disposé dans le caisson de guidage (78) de manière mobile par l'intermédiaire d'un guidage à coulisses (82).

7. Machine-outil (1) selon l'une des revendications précédentes 5 ou 6, **caractérisée en ce que** l'élément de verrouillage (79) est précontraint, de manière à s'avancer au-delà d'une face latérale (81) du carter (74) vers un moyen de butée et de commande (86), par un élément à ressort (80), tel qu'un ressort de pression, agissant entre ledit élément de verrouillage et le caisson de guidage (78).

8. Machine-outil (1) selon la revendication 7, **caractérisée en ce que** le moyen de butée et de commande (86) est fixé contre le dispositif de fixation (51).

9. Machine-outil (1) selon la revendication 7 ou 8, **caractérisée en ce que** le moyen de butée et de commande (86) est fixé sur la barre (16) de la presse.

10. Machine-outil (1) selon l'une quelconque des revendications précédentes, **caractérisée en ce qu'**un rail de guidage (66) pour le dispositif de guidage et d'arrêt (62) est relié en mouvement avec la barre (16) de la presse.

11. Machine-outil (1) selon la revendication 10, **caractérisée en ce que** le rail de guidage (66) est relié en mouvement avec le dispositif de fixation (51).

12. Machine-outil (1) selon l'une quelconque des revendications précédentes 7 à 11, **caractérisée en ce que** le moyen de butée et de commande (86) est formé par des moyens de commande (88) qui, lors du déplacement du dispositif de guidage et d'arrêt (62) dans la direction de positionnement, induisent sur une face frontale (85) de l'élément de verrouillage (79), dans la direction d'extension d'un axe médian (75), un couple de commande agissant dans le sens opposé à l'action du dispositif à ressort (80).

13. Machine-outil (1) selon l'une quelconque des revendications précédentes, **caractérisée en ce qu'**un moyen de commande (88) est réalisé sous la forme d'une butée d'arrêt (89) pour servir d'appui à l'élément de verrouillage (79) ou au dispositif de fixation (51) en direction de la surface de fondation (9).

14. Machine-outil (1) selon la revendication 13, **caractérisée en ce que** l'autre moyen de commande (88), formant une surface de commande (90) parallèle à la direction de déplacement, est disposé dans un écartement (92), mesuré dans la direction de déplacement du dispositif de fixation (51), par rapport à la butée d'arrêt (89) vers la surface de fondation (9).

15. Machine-outil (1) selon la revendication 14, **caractérisée en ce que** le moyen de butée et de commande (86) formant les moyens de commande (88) est formé par un élément en tôle d'une seule pièce.

16. Machine-outil (1) selon l'une quelconque des revendications précédentes 10 à 15, **caractérisée en ce que** le rail de guidage (66) avec le dispositif de guidage et d'arrêt (62) est disposé dans une paroi de carter (68) formée par au moins un profilé (67).

17. Machine-outil (1) selon la revendication 16, **caractérisée en ce que** sur la paroi de carter (68), dans une zone d'extrémité (69) orientée vers la surface de fondation, est disposée une plaque de support (70), orientée parallèlement à la surface de fondation (9), pour l'émetteur de rayons (47) et/ou le récepteur de rayons (48).

18. Machine-outil (1) selon une des revendications précédentes 16 ou 17, **caractérisée en ce que** dans la paroi de carter (68) sont disposées des lignes de transmission d'énergie et de données entre l'émetteur de rayons (47) et/ou le récepteur de rayons (48) et une interface de sortie.

19. Machine-outil (1) selon la revendication 18, **caractérisée en ce que** les lignes sont posées sur une chaîne de guidage des lignes, disposée dans la paroi de carter (68).

20. Machine-outil (1) selon une des revendications précédentes 18 ou 19, **caractérisée en ce que** l'interface de sortie est reliée via une ligne au dispositif de commande (46) de la machine.

21. Machine-outil (1) selon l'une quelconque des revendications précédentes, **caractérisée en ce qu'**une trajectoire de déplacement du dispositif de fixation (51) à partir de la position d'attente (54) peut être ajustée à différentes hauteurs (99) des outils de pliage (36) en vue du positionnement de l'émetteur de rayons (47) et du récepteur de rayons (48) dans différentes positions de travail (55) par des moyens de butée (97), tels que des tenons (98) insérables dans le rail de guidage (66).

22. Machine-outil (1) selon l'une quelconque des revendications précédentes 5 à 21, **caractérisée en ce que** le dispositif de verrouillage (77) est formé par un élément de calage (102), monté mobile dans le carter (74) du dispositif de guidage et d'arrêt (62).

23. Machine-outil (1) selon la revendication 22, **caractérisée en ce que** l'élément de calage (102) peut être déplacé dans la direction de déplacement du dispositif de fixation (51) dans une glissière (101) du carter (74).

24. Machine-outil (1) selon la revendication 23, **caractérisée en ce que** les voies de guidage (100) de la glissière (101) pour l'élément de calage (102) sont disposées en angle par rapport à la direction de déplacement, formée par le rail de guidage (66), du dispositif de fixation (51).

25. Machine-outil (1) selon la revendication 23 ou 24, **caractérisée en ce que** l'élément de calage (102) est mis en appui dans la glissière (101) par des galets de roulement (104).

26. Machine-outil (1) selon l'une quelconque des revendications 5 à 25, **caractérisée en ce que** l'élément de calage (102) peut être déplacé, par l'intermédiaire de moyens de commande (108), tels qu'un câble de traction (109) et/ou un levier, hors d'une position de blocage, dans laquelle le dispositif de fixation (51) est positionné face au carter (74), vers une position de déblocage.
